# EUROPÄISCHE PATENTANMELDUNG

(11) **EP 1 710 550 A2**
(43) Veröffentlichungstag der Anmeldung: **11.10.2006**
(21) Anmeldenummer: 06007090.1
(22) Anmeldetag: 04.04.2006
(51) Int. Cl.: G01M 3/00

(54) **Verfahren und Vorrichtung zum Feststellen eines Kühlmitteldefizits in einem Wärmetauschersystem**

(30) Priorität: 08.04.2005 DE 102005016111
(71) Anmelder: GM Global Technology Operations, Inc., Detroit, MI 48265-3000 (US)
(72) Erfinder: Illium, Justus, 55130 Main (DE)
(74) Vertreter: Daniel, Ulrich W.P.

(57) **Zusammenfassung**

Bei einem Verfahren zum Feststellen eines Kühlmitteldefizits in einem Wärmetauschersystem wird die Geschwindigkeit einer Temperaturänderung im Wärmetauschersystem beobachtet und ein Kühlmitteldefizit festgestellt, wenn die Geschwindigkeit der Temperaturänderung einen vordefinierten Wert übersteigt. Eine Vorrichtung zum Feststellen eines Kühlmitteldefizits weist einen Temperatursensor und eine Vergleichseinrichtung auf, die die Geschwindigkeit einer Temperaturänderung im Wärmetauschersystem mit einem vordefinierten Wert vergleicht und bei Übersteigen des vordefinierten Wertes ein für diesen Zustand repräsentatives Signal ausgibt.

## Beschreibung

Die Erfindung betrifft ein Verfahren und eine Vorrichtung zum Feststellen eines Kühlmitteldefizits in einem Wärmetauschersystem, die sich insbesondere für den Einsatz in Kraftfahrzeugen eignen.

Bei einem Austritt von Kühlmittel aus einem Wärmetauschersystem kann aufgrund von Luftblasenbildung im Kühlmittelkreislauf die Temperatur des Kühlmittels bzw. des zu kühlenden Systems nicht mehr zuverlässig erfasst werden. Eine Bedienperson kann durch eine irreführende Anzeige getäuscht werden. Der Weiterbetrieb des zu kühlenden Systems kann zur Überhitzung und damit zu einem erheblichen Schaden führen.

Aus der Deutschen Offenlegungsschrift DE 30 30 296 A1 ist eine Einrichtung zur Feststellung von Dampfleckagen insbesondere in Kernkraftwerken bekannt, die einen Temperaturfühler und einen davon unabhängigen Dampfdetektor aufweist. Eine Leckage wird erkannt, wenn gleichzeitig ein Temperaturabfall und die Anwesenheit von Dampf erkannt werden.

Der vorliegenden Erfindung liegt nun die Aufgabe zugrunde, ein Verfahren und eine Vorrichtung zum Festellen eines Kühlmitteldefizits in einem Wärmetauschersystem bereitzustellen, die mit einfachen Mitteln ein Kühlmitteldefizit bzw. eine Leckage zuverlässig erfassen können.

Erfindungsgemäß wird diese Aufgabe durch ein Verfahren und eine Vorrichtung gelöst, wie sie in den unabhängigen Patentansprüchen definiert sind.

Demgemäß ist ein Verfahren zum Feststellen eines Kühlmitteldefizits in einem Wärmetauschersystem vorgesehen, bei dem die Geschwindigkeit einer Temperaturänderung im Wärmetauschersystem beobachtet wird und ein Kühlmitteldefizit festgestellt wird, wenn die Geschwindigkeit der Temperaturänderung einen vordefinierten Wert übersteigt.

Ferner ist eine Vorrichtung zum Feststellen eines Kühlmitteldefizits in einem Wärmetauschersystem vorgesehen, die einen Temperatursensor und eine Vergleichseinrichtung aufweist, die die Geschwindigkeit einer Temperaturänderung im Wärmetauschersystem mit einem vordefinierten Wert vergleicht und bei Übersteigen des vordefinierten Wertes ein für diesen Zustand repräsentatives Signal ausgibt.

Vorteilhafte Ausgestaltungen und Weiterbildungen der Erfindung sind Gegenstand der Unteransprüche sowie der Beschreibung unter Bezugnahme auf die Zeichnung.

Die der vorliegenden Erfindung zugrunde liegende Idee besteht darin, aus einer Abweichung von systemeigenen Parametern einen Rückschluss auf ein Kühlmitteldefizit in einem Wärmetauschersystem zu ziehen. Ein solches Kühlmitteldefizit tritt insbesondere im Falle eines Defekts bzw. einer Leckage auf.

Infolge eines Kühlmitteldefizits kommt es zur Bildung von Luftblasen. Da Luft eine geringere thermische Kapazität als das eingesetzte Kühlmittel besitzt, detektiert ein Temperatursensor, wenn er gerade von einer Luftblase umspült wird, eine zu geringe Temperatur. Die Änderung des detektierten und ausgegebenen Temperatursignals erfolgt schlagartig. Dies gilt genauso, wenn der Temperatursensor anschließend wieder von Kühlmittel umspült wird und wieder die höhere Temperatur des Kühlmittels sensiert. Diese raschen, sprunghaften Temperaturänderungen unterscheiden sich signifikant von den Verhältnissen in einem intakten System, in dem der Anstieg und der Abfall der Temperatur kontinuierlich mit einer relativ langsamen Geschwindigkeit erfolgt. Aus dem Auftreten einer Anomalie im Temperaturverhalten des Wärmetauschersystems wird erfindungsgemäß auf einen Defekt bzw. eine Leckage geschlossen werden.

Obgleich die vorliegende Erfindung für beliebige Wärmetauschersysteme eingesetzt werden kann, eignet sie sich in besonderer Weise für den Einsatz in einem Kühlkreislauf zur Kühlung eines Verbrennungsmotors mit einem flüssigen Kühlmittel, insbesondere eines Motors eines Kraftfahrzeugs.

Die Erfindung wird nachfolgend anhand der in den schematischen Figuren der Zeichnung angegebenen Ausführungsbeispiele näher erläutert. Es zeigt dabei:
- Fig. 1: ein Wärmetauschersystem eines Kraftfahrzeugs;

- Figur 2: den zeitlichen Verlauf der Temperatur des Kühlmittels.

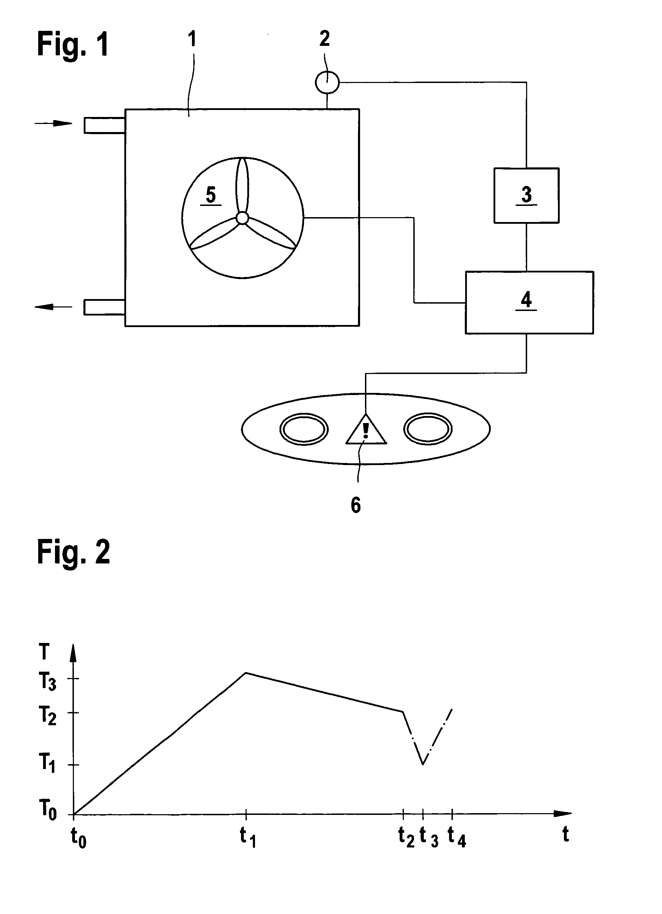

Figur 1 illustriert ein Wärmetauschersystem für einen Verbrennungsmotor eines Kraftfahrzeugs, in dem von einer nicht dargestellten Kühlmittelpumpe in Pfeilrichtung Kühlmittel einem Kühler 1 zugeführt wird. Bei dem Kühlmedium handelt es sich um Wasser, das übliche Zusätze an Korrosions- und Gefrierschutzmittel enthält.

Die Temperatur des Kühlmittels wird von einem Temperatursensor 2 überwacht. Der Temperatursensor 2 gibt ein Temperatursignal an eine Auswerteeinheit 3 aus.

In der Auswerteeinheit 3 sind vordefinierte Werte für eine maximale Geschwindigkeit der Temperaturänderung als Grenzwerte gespeichert. Dabei können für einen Temperaturanstieg andere Werte als für einen Temperaturabfall vorgesehen werden. Die maximal zulässige Geschwindigkeit der Temperaturänderung wird empirisch für den jeweiligen Typ des Wärmetauschers und den Typ des zu kühlenden Systems ermittelt. Alternativ kann die Auswerteeinheit 3 selbst Erfahrungswerte speichern und zu diesen einen vordefinierten Abstandswert addieren.

Wird eine zulässige Grenze für die Geschwindigkeit der Temperaturänderung überschritten, gibt die Auswerteeinheit 3, die die vom Temperatursensor 2 kontinuierlich ermittelten Temperaturwerte bzw. Temperaturänderungen fortlaufend überwacht, ein für diesen Zustand repräsentatives Signal an ein Steuergerät 4 aus.

Erkennt das Steuergerät 4, bei dem es sich um ein Motorsteuergerät handelt, das einen Fehlerzustand signalisierende Signal der Auswerteeinheit 3, gibt es ein visuelles Warnsignal an eine Anzeige 6 in einem Armaturenbrett und/oder ein akustisches Signal über einen Lautsprecher aus.

Zusätzlich ergreift das Steuergerät 4 Maßnahmen, die eine Überhitzung des zu kühlenden Systems, also in diesem Beispiel eine Überhitzung des Verbrennungsmotors verhindern. Hierzu kann das Steuergerät 4 alternativ oder kumulativ folgende Maßnahmen einleiten:

Das Steuergerät 4 kann sicherstellen, dass ein Lüfter 5 bzw. Ventilator des Wärmetauschersystems in Betrieb ist oder mit maximaler Leistung betrieben wird. Eine eventuell eingeschaltete und vom zu kühlenden Motor angetriebene Klimaanlage wird abgeschaltet. Ferner kann das Steuergerät 4 veranlassen, dass vom Wärmetaucher bzw. Kühler 1 erwärmte Luft in den Fahrgastraum des Kraftfahrzeugs, insbesondere den Fußraum mit maximaler Leistung eines Gebläses einer Innenraumklimatisierung zugeführt wird. Außerdem kann das Steuergerät 4 die Leerlaufdrehzahl des vom Wärmetauscher zu kühlenden Motors erhöhen, um eine Umwälzung des Kühlmittels zu gewährleisten, und nach dem Abschalten des zu kühlenden Motors den Lüfter 5 und/oder eine Kühlmittelpumpe des Wärmetauschersystems für eine vordefinierte Zeitspanne weiter betreiben.

Die Zuführung von Warmluft in den Fahrgastraum mit maximaler Gebläseleistung sorgt für eine zusätzlichen Hinweis an den Fahrzeugführer, dass ein Defekt des Wärmetauschersystems vorliegt.

Figur 2 veranschaulicht den Temperaturverlauf über die Zeit in einem Wärmetauschersystem. Vom Zeitpunkt t0 bis zum Zeitpunkt t1 erfolgt ein kontinuierlicher Anstieg der von einem Temperatursensor gemessenen Temperatur von T0 auf einen maximalen Temperaturwert T3, bei dem ein Lüfter zugeschaltet wird. Dadurch sinkt die Temperatur wieder auf einen Wert T2 zum Zeitpunkt t2 ab. Zu diesem Zeitpunkt tritt eine Leckage des Wärmetauschersystems auf. Kühlmittel tritt aus und Luft gelangt in den Kühlmittelkreislauf. Zum Zeitpunkt t2 wird der Temperatursensor folglich von einer Luftblase umspült. Da Luft eine geringere thermische Kapazität als das eingesetzte Kühlmittel besitzt, misst der Temperatursensor eine niedrigere Temperatur als zuvor, nämlich den Wert T1 zum Zeitpunkt t3. Anschließend zieht die Luftblase am Temperatursensor vorbei, so dass dieser kurzzeitig wieder vom Kühlmittel benetzt wird und damit sofort wieder dessen höhere Temperatur T2 sensiert. Die durch die Luftblase bedingte Temperaturänderung am Temperatursensor erfolgt im Gegensatz zur Erwärmung und Abkühlung des Kühlmittels schlagartig. Es tritt ein Gradient auf, der wesentlich größer ist, als der eines ungestörten Systems. Der infolge der Luftblase bewirkte Temperaturabfall weist eine deutlich höhere Geschwindigkeit bzw. Steigung Δ(T2-T1)/Δ(t3-t2) sowohl gegenüber einer normalen Geschwindigkeit eines Temperaturabfalls Δ(T3-T2)/Δ(t2-t1) als auch gegenüber einer normalen Geschwindigkeit eines Temperaturanstiegs Δ(T3-T0)/Δ(t1-t0) des intakten Wärmetauschersystems auf. Dasselbe gilt auch für den nachfolgenden Temperaturanstieg, bei dem der Temperatursensor zum Zeitpunkt t4 wieder den Ausgangswert T2 misst, da er wieder vom Kühlmittel umspült wird.

Für die Erkennung eines Kühlmitteldefizits bzw. eines Fehler- oder Leckagezustands können sowohl das Überschreiten einer vordefinierten Geschwindigkeit für einen schlagartiger Temperaturabfall als auch das Überschreiten einer vordefinierten Geschwindigkeit für einen schlagartiger Temperaturanstieg oder eine rasche Aufeinanderfolge von beiden innerhalb eines definierten Zeitraums genutzt werden.

Obgleich die vorliegende Erfindung vorstehend anhand eines bevorzugten Ausführungsbeispiels beschrieben wurde, ist sie nicht darauf beschränkt, sondern auf vielfältige Art und Weise modifizierbar.

So sei die Erfindung nicht auf den in den vorstehenden Figuren dargestellten, speziellen Aufbau der Vorrichtung beschränkt. Vielmehr kann eben diese auf beliebige Art und Weise modifiziert werden, ohne dass vom grundlegenden Prinzip der Erfindung abgewichen wird. Insbesondere muss die Auswerteeinheit nicht notwendigerweise als separates physikalisches Gerät realisiert sein. Deren Aufgaben können auch vom Steuergerät übernommen werden. Außerdem eignet sich die Erfindung nicht nur für die Feststellung einer Leckage, sondern zum Ermitteln einer unzureichenden Befüllung des Wärmetauschersystems mit Kühlmittel im Allgemeinen.

### Bezügszeichenliste

- 1: Kühler
- 2: Temperatursensor
- 3: Auswerteeinheit
- 4: Steuergerät
- 5: Lüfter
- 6: Anzeige

## Patentansprüche

1. Verfahren zum Feststellen eines Kühlmitteldefizits in einem Wärmetauschersystem, wobei
- die Geschwindigkeit einer Temperaturänderung im Wärmetauschersystem beobachtet wird und
- ein Kühlmitteldefizit festgestellt wird, wenn die Geschwindigkeit der Temperaturänderung einen vordefinierten Wert übersteigt.

2. Verfahren nach Anspruch 1, **dadurch gekennzeichnet, dass** ein Kühlmitteldefizit festgestellt wird, wenn die Geschwindigkeit eines Temperaturabfalls einen vordefinierten Wert übersteigt.

3. Verfahren nach wenigstens einem der vorhergehenden Ansprüche, **dadurch gekennzeichnet, dass** ein Kühlmitteldefizit festgestellt wird, wenn die Geschwindigkeit eines Temperaturanstiegs einen vordefinierten Wert übersteigt.

4. Verfahren nach dem vorhergehenden Anspruch, **dadurch gekennzeichnet, dass** ein Kühlmitteldefizit festgestellt wird, wenn ein Temperaturabfall und ein Temperaturanstieg, deren Geschwindigkeiten jeweils einen vordefinierten Wert übersteigen, innerhalb eines definierten Zeitraums auftreten.

5. Verfahren nach wenigstens einem der vorhergehenden Ansprüche, **dadurch gekennzeichnet, dass** von einem Steuergerät Maßnahmen ergriffen werden, die eine Überhitzung des zu kühlenden Systems verhindern.

6. Verfahren nach wenigstens einem der vorhergehenden Ansprüche, **dadurch gekennzeichnet, dass** wenigstens eine der folgenden Maßnahmen eingeleitet wird:
- eine von einem zu kühlenden Motor angetriebene Klimaanlage wird abgeschaltet,
- es wird sichergestellt, dass ein Lüfter des Wärmetauschersystems in Betrieb ist,
- vom Wärmetauscher erwärmte Luft wird in einen Fahrgastraum, insbesondere den Fußraum, mit maximaler Leistung eines Gebläses einer Innenraumklimatisierung zugeführt,
- eine visuelle Warnung wird ausgegeben,
- eine akustische Warnung wird ausgegeben,
- die Leerlaufdrehzahl eines vom Wärmetauschersystem zu kühlenden Motors wird erhöht,
- nach dem Abschalten eines vom Wärmetauschersystem gekühlten Motors wird der Lüfter und/oder eine Kühlmittelpumpe des Wärmetauschersystems für eine vordefinierte Zeitspanne weiter betrieben.

7. Verfahren nach wenigstens einem der vorhergehenden Ansprüche, **dadurch gekennzeichnet, dass** der Lüfter des Wärmetauschersystems unabhängig von der gemessenen Temperatur des Kühlmittels mit maximaler Leistung betrieben wird.

8. Verfahren nach wenigstens einem der vorhergehenden Ansprüche, **dadurch gekennzeichnet, dass** das Wärmetauschersystem den Verbrennungsmotor eines Kraftfahrzeugs kühlt.

9. Vorrichtung zum Feststellen eines Kühlmitteldefizits in einem Wärmetauschersystem, die aufweist:
- einen Temperatursensor (2),
- eine Vergleichseinrichtung (3), die die Geschwindigkeit einer Temperaturänderung im Wärmetauschersystem mit einem vordefinierten Wert vergleicht und bei Übersteigen des vordefinierten Wertes ein für diesen Zustand repräsentatives Signal ausgibt.

10. Vorrichtung nach dem vorhergehenden Anspruch, **gekennzeichnet durch** wenigstens ein Steuergerät (4), das ein Verfahren nach einem der vorhergehenden Verfahrensprüche steuert.
